# EUROPÄISCHE PATENTANMELDUNG

(11) **EP 2 620 871 A2**
(43) Veröffentlichungstag der Anmeldung: **31.07.2013**
(21) Anmeldenummer: 13151688.2
(22) Anmeldetag: 17.01.2013
(51) Int. Cl.: G06F 9/445

(54) **Verfahren zur Konfiguration eines BIOS in einem Computersystem sowie Computerprogrammprodukt**

(30) Priorität: 30.01.2012 DE 102012100738
(71) Anmelder: Fujitsu Technology Solutions Intellectual Property GmbH, 80807 München (DE)
(72) Erfinder: Pusch, Detlef, 33106 Paderborn (DE); Arnold, Lothar, 33129 Delbrück (DE); Lüttgenau, Karl-Josef, 33178 Borchen (DE)
(74) Vertreter: Epping - Hermann - Fischer

(57) **Zusammenfassung**

Die Erfindung betrifft ein Verfahren zur Konfiguration eines Basic Input-Output Systems (BIOS) in einem Computersystem (1), umfassend die Schritte:
- Erstellen von ersten Konfigurationsdaten im BIOS zur Konfiguration des BIOS,
- Übergabe der ersten Konfigurationsdaten vom BIOS an eine Managementeinheit (4) des Computersystem (1) sowie
- Speichern der ersten Konfigurationsdaten in der Managementeinheit (4),

wobei die Schritte bei jedem Start des Computersystems (1) durchgeführt werden.

Ferner wird ein Computerprogrammprodukt beschrieben, welches bei Ausführung auf einem Computersystem ein derartiges Verfahren durchführt.

## Beschreibung

Die Erfindung betrifft ein Verfahren zur Konfiguration eines BIOS in einem Computersystem sowie ein Computerprogrammprodukt, welches auf einem Computersystem ausgeführt werden kann.

Es existieren bereits Verfahren zur Konfiguration eines Basic Input-Output Systems (BIOS) in einem Computersystem, wobei Parameter beziehungsweise Einstellungen im BIOS verändert werden können, um das BIOS und insbesondere die vom BIOS durchgeführten Steuerungsaufgaben in einem Computersystem zu verändern und an den Betrieb des Computersystems anzupassen.

Insbesondere existieren Verfahren zur Konfiguration eines BIOS durch ein entfernt liegendes Computersystem, wobei über ein Datennetzwerk vom entfernt liegenden Computersystem auf das BIOS zugegriffen und die entsprechenden Einstellungen vorgenommen werden können. Der Nachteil bei diesem Verfahren liegt darin, dass eine Konfiguration des BIOS nur durch direkten Zugriff auf das BIOS durchgeführt werden kann. Dies ist entweder während eines Startvorgangs des Computersystems oder bei bereits hochgefahrenem Computersystem möglich. Während das Computersystem inaktiv ist (insbesondere bei abgeschaltetem Prozessorkern), ist eine derartige Konfiguration des BIOS nicht möglich.

Andere Lösungen sehen vor, Konfigurationsdaten in einen Speicher einer Managementeinheit des Computersystems einzulesen und dort vorzuhalten, bis das Computersystem gestartet und hochgefahren ist, sodass anschließend die Konfigurationsdaten von der Managementeinheit in das BIOS übernommen werden können.

Derartige Lösungen haben jedoch den Nachteil, dass eine Konfiguration unter Umständen mühsam durchzuführen ist, wenn nicht bekannt ist, welche Einstellungen und Parameter im BIOS vorzunehmen sind beziehungsweise gegenwärtig vorliegen.

Es ist Aufgabe der Erfindung, ein verbessertes Verfahren zur Konfiguration eines BIOS in einem Computersystem zu Beschreiben, welches die Konfiguration des BIOS erheblich vereinfacht.

Die Aufgabe wird durch ein Verfahren der eingangs genannten Art gelöst, umfassend die Schritte:
- Erstellen von ersten Konfigurationsdaten im BIOS zur Konfiguration des BIOS,
- Übergabe der ersten Konfigurationsdaten vom BIOS an eine Managementeinheit des Computersystems,
- Speichern der ersten Konfigurationsdaten in der Managementeinheit, wobei die Schritte bei jedem Start des Computersystems durchgeführt werden.

Ein derartiges Verfahren hat den Vorteil, dass die Konfigurationsdaten des BIOS, das heißt eine Sammlung aller notwendigen Informationen zur Konfiguration des BIOS, bei jedem Start des Computersystems in eine Managementeinheit des Computersystems geschrieben werden können. Bei jedem Start des Computersystems gibt das BIOS somit von sich aus Konfigurationsdaten aus, welche beispielsweise den aktuellen Konfigurationszustand des BIOS widerspiegeln. Auf diese Weise kann beispielsweise ein Servicemitarbeiter auf die Managementeinheit zugreifen und einfach und schnell einen aktuellen Systemzustand des BIOS sowie einen aktuellen Systemzustand aller Hardwarekomponenten des Computersystems, welche über das BIOS angesteuert werden, überprüfen. Ferner ist auf diese Weise möglich, eine Konfiguration des BIOS anhand der ausgegebenen Daten vorbereiten und durchführen.

Ein weiterer Vorteil des Verfahrens besteht darin, dass die Konfigurationsdaten des BIOS in der Managementeinheit des Computersystems zugänglich sind, ohne dass eine Benutzerschnittstelle des BIOS selbst aufgerufen werden muss. Insofern ist es möglich, Konfigurationsdaten des BIOS einzusehen und zu bearbeiten, ohne dass das Computersystem hochfahren oder in einem aktiven Zustand sein muss.

Dennoch ermöglicht das Verfahren, vollständige Konfigurationsdaten des BIOS, wie sie über eine herkömmliche Benutzerschnittstelle des BIOS zugänglich sind, in der Managementeinheit vorzuhalten. Dies hat den Vorteil, dass sämtliche Einstellungen, welche über eine herkömmliche Benutzerschnittstelle vorgenommen werden können, auch über das hier beschriebene Verfahren vorgenommen werden können.

Der Begriff Basic Input-Output System (BIOS) wird in diesem Kontext verstanden, als jegliches grundlegendes Eingabe-/Ausgabesystem zur Steuerung der Hardwarekomponenten in einem Computersystem beziehungsweise zum Aufruf und Starten eines Betriebssystems des Computersystems während eines Starts des Computersystems. Somit umfasst das hier genannte Basic Input-Output System sowohl das bekannte BIOS als auch dessen Nachfolger, das sogenannte Extensible Firmware Interface (EFI) beziehungsweise Unified Extensible Firmware Interface (UEFI). Daneben ist auch jegliche andere Firmware umfasst, welche die grundlegenden Steuerungsaufgaben von Hardwarekomponenten in einem Computersystem durchführt und/oder beim Start des Computersystems ein Betriebssystem des Computersystems ausführt.

Die Übergabe der ersten Konfigurationsdaten vom BIOS an eine Managementeinheit des Computersystems kann beispielsweise über eine Konfigurationsschnittstelle des BIOS erfolgen, welche als Binärschnittstelle beziehungsweise als so genanntes Application Binary Interface (ABI) oder als Generalized Application Binary Interface (GABI) ausgeführt ist. Die Konfigurationsschnittstelle definiert, auf welche Weise die ersten Konfigurationsdaten im BIOS erstellt und/oder auf Maschinenebene an die Managementeinheit übergeben werden.

Der Begriff "Managementeinheit" des Computersystems wird hier als ein Controller-Baustein verstanden zur Erfassung, Überwachung und Verarbeitung von Systemdaten und Systemparametern, zum Beispiel Temperatur, Umdrehungsgeschwindigkeit von Lüftern, Betriebssystemstatus oder ähnliches, sodass insbesondere in Fehlersituationen des Computersystems über ein externes Datennetzwerk auf das Computersystem zugegriffen werden kann. Prominenter Vertreter einer derartige Managementeinheit ist der so genannte Baseboard Management Controller (BMC) beziehungsweise der so genannte Integrated Remote Management Controller (IRMC), ein BMC, welcher insbesondere über eine Kommunikationsschnittstelle zur Anwendung an ein Datennetzwerk (z.B. Local Area Network = LAN) verfügt. Derartige Managementeinheiten kommen insbesondere in Serversystemen zum Einsatz.

Der Begriff "Computersystem" wird in diesem Kontext verstanden als jegliches Computersystem. Insbesondere umfasst der Begriff Serversysteme, Rack-Server-Systeme sowie Blade-Server-Systeme.

Vorteilhaft erfolgt die Übergabe der ersten Konfigurationsdaten vom BIOS an die Managementeinheit nach Beenden eines Selbsttests von Komponenten des Computersystems. Ein derartiger Selbsttest ist beispielsweise durch den so genannten Power-on-Self-Test (POST) beschrieben. Während dieses Selbsttests werden Hardware-Komponenten im Computersystem über das BIOS angesprochen und auf korrekte Funktionsweise hin getestet. Im Fehlerfall können Informationen über die Art des Fehlers für einen Benutzer ausgegeben werden. Nach dem Selbsttest kann eine korrekte Aussage über den aktuellen Systemzustand des Computersystems getroffen werden. Somit ist es vorteilhaft, die Übergabe der ersten Konfigurationsdaten vom BIOS an die Managementeinheit nachgeordnet zu diesem Selbsttest durchzuführen, um ein möglichst unverfälschtes und realistisches Bild des gegenwärtigen Systemzustands zu erhalten.

Bevorzugt umfasst das Verfahren ferner die Schritte eines Erstellens von zweiten Konfigurationsdaten in der Managementeinheit zur Konfiguration der Managementeinheit sowie des Speicherns der zweiten Konfigurationsdaten in der Managementeinheit. Das Verfahren erlaubt somit nicht nur das Erfassen von Konfigurationsdaten des BIOS, sondern auch das Erfassen von Konfigurationsdaten der Managementeinheit, wobei letztere Konfigurationsdaten ebenfalls in der Managementeinheit hinterlegt werden und beispielsweise durch einen Servicemitarbeiter über ein externes Datennetzwerk ausgelesen werden können.

Das Erstellen der zweiten Konfigurationsdaten in Bezug zur Managementeinheit hat zudem den Vorteil, dass sämtliche Einstellungen erfasst werden können, welche in oder an der Managementeinheit selbst vorzunehmen sind beziehungsweise vorgenommen werden können.

Eine Konfiguration der Managementeinheit kann jedoch auch über das BIOS erfolgen. Dazu kann es im Rahmen eines Initialisierungsprozesses der Managementeinheit notwendig sein, bestimmte Einstellungen der Managementeinheit über eine Benutzerschnittstelle im BIOS vorzunehmen. Denn um auf bestimmte Funktionalitäten der Managementeinheit (z.B. eine Anbindung der Managementeinheit an ein externes Datennetzwerk) im Rahmen des erläuterten Verfahrens zur Konfiguration des BIOS zugreifen zu können, kann es notwendig sein, diese Einstellungen der Managementeinheit im BIOS über die Benutzerschnittstelle des BIOS vorzunehmen.

Vorzugsweise umfasst das Verfahren ferner den Schritt einer Übergabe der Konfigurationsdaten, welche in der Managementeinheit gespeichert sind, von der Managementeinheit über ein Datennetzwerk an ein weiteres Computersystem. Dabei können sowohl die ersten Konfigurationsdaten des BIOS als auch die oben erläuterten zweiten Konfigurationsdaten der Managementeinheit an das weitere Computersystem übergeben werden.

Zur Anbindung der Managementeinheit an ein externes Datennetzwerk ist die Managementeinheit vorteilhaft mit einer Kommunikationsschnittstelle ausgestattet. Beispielsweise kann die Managementeinheit eine Schnittstelle für ein Local Area Network (LAN) aufweisen. Über das Datennetzwerk kann ein externes Computersystem die in der Managementeinheit hinterlegten Konfigurationsdaten auslesen und weiter verarbeiten. Ferner ist es denkbar, dass ein Servicemitarbeiter im Rahmen einer Fernwartung am externen Computersystem Änderungen der Konfigurationsdaten vornimmt und/oder eine Analyse der übergebenen Konfigurationsdaten vornimmt.

Eine Bearbeitung der Konfigurationsdaten kann auf einfache Weise beispielhaft über ein Texteditor-Programm im externen Computersystem durchgeführt werden.

Vorteilhaft liegen die Konfigurationsdaten im so genannte XML-Format (XML = Extensible Markup Language) vor. Das XML-Format hat den Vorteil, dass hierarchisch strukturierte Daten plattform- und implementierungsunabhängig zwischen Computersystemen standardisiert ausgetauscht werden können. Eine Bearbeitung der Konfigurationsdaten im XML-Format ist somit in einem externen Computersystem, zum Beispiel im Rahmen eines Texteditors, auf einfache Weise möglich.

Bevorzugt umfasst das Verfahren ferner folgende Schritte:
- Übergabe von dritten Konfigurationsdaten von einem weiteren Computersystem über ein Datennetzwerk an die Managementeinheit des Computersystems, sowie
- Speichern der dritten Konfigurationsdaten in der Managementeinheit, wobei die dritten Konfigurationsdaten vordefinierte Einstellungen zur Konfiguration des BIOS und/oder der Managementeinheit umfassen.

Die dritten Konfigurationsdaten umfassen vordefinierte Einstellungen, welche im BIOS und/oder in der Managementeinheit des Computersystems vorzunehmen sind. Die dritten Konfigurationsdaten können beispielsweise über einen Texteditor im externen Computersystem von einem Servicemitarbeiter erstellt werden. Im Rahmen des erläuterten Verfahrens können diese Konfigurationsdaten über das Datennetzwerk an das Computersystem übergeben werden.

Wie bereits oben erläutert, hat das Verfahren den Vorteil, dass die dritten Konfigurationsdaten zunächst in der Managementeinheit hinterlegt werden. Es ist nicht notwendig, dass das Computersystem bei Übergabe der dritten Konfigurationsdaten gestartet wird oder bereits in einem aktiven Zustand befindlich ist. Wenn das Computersystem gestartet wird und das BIOS des Computersystems geladen und gestartet wird, können die dritten Konfigurationsdaten von der Managementeinheit über eine Konfigurationsschnittstelle an das BIOS übergeben werden. Die dritten Konfigurationsdaten können dann bisherige Konfigurationsdaten im BIOS überschreiben und Einstellungen des BIOS neu festlegen.

Gegebenenfalls ist anschließend eine bestimmte Aktion notwendig, um die neuen Einstellungen im BIOS zu übernehmen. Dies kann beispielsweise ein Neustart des Computersystems sein (so genannter Warm/Cold Reset oder Power Cycling). Vor oder nach dieser Aktion können die geänderten Einstellungen in Form von ersten Konfigurationsdaten, wie oben erläutert, vom BIOS an die Managementeinheit übergeben und in der Managementeinheit gespeichert werden.

Vorzugsweise erfolgt vor der Übergabe der dritten Konfigurationsdaten von der Managementeinheit an das BIOS zunächst eine Analyse der dritten Konfigurationsdaten in der Managementeinheit. "Analyse" kann beispielsweise bedeuten, dass die dritten Konfigurationsdaten mit weiteren Konfigurationsdaten verglichen werden, welche in der Managementeinheit hinterlegt sind. Auf diese Weise kann festgestellt werden, ob die dritten Konfigurationsdaten Einstellungen enthalten, welche sich von den gegenwärtig in der Managementeinheit hinterlegten Einstellungen des BIOS unterscheiden. Eine derartige Analyse der dritten Konfigurationsdaten könnte beispielsweise über einen so genannten Parser erfolgen, welcher eine Syntaxanalyse der Datenstruktur vornimmt. Insbesondere bei Vorliegen der Konfigurationsdaten im XML-Format kann ein XML-Parser zur Analyse der XML-Daten und zum Bereitstellen der darin enthaltenen Informationen (Elemente, Attribute, Zeitstempel, etc.) verwendet werden.

Ferner kann im Rahmen der erläuterten Analyse auch festgestellt werden, ob die dritten Konfigurationsdaten für die Konfiguration des BIOS oder für die Konfiguration der Managementeinheit unmittelbar innerhalb der Managementeinheit bestimmt sind.

Schließlich erfolgt eine Übergabe der dritten Konfigurationsdaten von der Managementeinheit an das BIOS vorteilhaft nur, falls die Analyse der dritten Konfigurationsdaten ergeben hat, dass die dritten Konfigurationsdaten zur Konfiguration des BIOS vorbestimmt sind und sich von den ersten Konfigurationsdaten unterscheiden.

Dies hat den Vorteil, dass gegenwärtig aktuelle Konfigurationsdaten in das BIOS übernommen werden, sodass eine Änderung der Einstellungen im BIOS nur vorgenommen wird, wenn eine gültige und konsistente Konfiguration in der Managementeinheit hinterlegt ist. Auf diese Weise können Fehler in der Konfiguration des BIOS reduziert beziehungsweise unterbunden werden. Zudem kann auf diese Weise der Datenstrom zwischen der Managementeinheit und dem BIOS gering gehalten werden, weil nur Konfigurationsdaten in das BIOS übertragen werden, welche konkret für Einstellungen im BIOS vorbestimmt sind. Dadurch wird auch die gesamte Performance des Systems nicht negativ beeinflusst.

Bevorzugt umfassen die Konfigurationsdaten obligatorisch vorbestimmte Parameter sowie momentane Einstellungen der Parameter und fakultativ Standardeinstellungen (so genannte "default"-Einstellungen) der Parameter. Das heißt, dass die Konfigurationsdaten Informationen darüber umfassen, welche Parameter, Optionen und Einstellmöglichkeiten überhaupt im BIOS vorhanden sind, welche momentanen Einstellungen vorliegen und welche Einstellungen standardmäßig, beispielsweise bei einem Reset oder einer Neuinstallation des BIOS, vordefiniert sind. Dies ermöglicht eine sinnvolle und vollumfängliche Handhabung und Bearbeitung der Konfigurationsdaten.

Vorteilhaft umfassen die Konfigurationsdaten eine vollständige Sammlung aller Informationen, welcher erforderlich sind, um Änderungen an den Einstellungen in gleicher Weise vornehmen zu können, wie wenn Einstellungen über eine Benutzerschnittstelle des BIOS (unmittelbar im BIOS selbst) vorgenommen würden.

Bei Vorliegen der Konfigurationsdaten im XML-Format können für jeden Datensatz verschiedenste Untergruppen, Elemente und Attribute festgelegt sein. Die Datensätze können beispielsweise Titel oder Name eines jeden Elements, Parameterwerte, Informationen über optionale Modifikationen, Speicheradresse der Daten, Abhängigkeiten verschiedener Parameter, etc. gemäß einer XML-Syntax umfassen. Zudem können die Konfigurationsdaten eine Information über die aktuelle BIOS-Version und/oder eine Information über den Systemtypus des Computersystems oder einzelner Komponenten des Computersystems umfassen. Dies erlaubt externen Verarbeitungsprogrammen eine verbesserte Verarbeitung und Bewertung der Konfigurationsdaten hinsichtlich einer Kompatibilität beziehungsweise eines Systemzustands des Computersystems.

Vorzugsweise sind Konfigurationsdaten, welche in der Managementeinheit gespeichert sind, in einer Profildatei zusammengefasst. Die Profildatei beschreibt somit eine übergeordnete Entität, welche einen vollständigen Konfigurationsdatensatz kennzeichnet und diesen von einem anderen Konfigurationsdatensatz unterscheidbar macht.

Ferner erlaubt die Erstellung einer Profildatei die Übergabe und das Laden von vollständigen Konfigurationsdatensätzen in das BIOS des Computersystems. Das bedeutet, dass eine Aktualisierung von BIOS-Einstellungen automatisiert über die Profildatei durchgeführt werden können. Es müssen nicht die einzelnen Einstellungen nacheinander umgeschrieben werden, sondern es kann auf einfache Weise ein veraltetes Konfigurationsprofil im BIOS durch ein aktualisiertes Konfigurationsprofil ersetzt werden.

Zudem bieten Profildateien den Vorteil, dass eine Vielzahl von Computersystemen, welche über das hier erläuterte Verfahren zur Konfiguration des BIOS angesprochen werden, auf einfache und zeitsparende Weise aktualisiert werden können. Beispielsweise kann eine Profildatei für einen bestimmten Systemtypus erstellt und über das Verfahren zur Konfiguration des BIOS von einem externen Computersystem über ein Datennetzwerk automatisiert auf sämtliche Computersysteme dieses Systemtypus aufgespielt werden. Dies erleichtert auch die Fernwartung einer Vielzahl von Computersystemen, wie sie beispielsweise in Serversystemen oder ganzen Serverfarmen beziehungsweise Rechenzentren vorliegen.

Vorzugsweise ist bei dem erläuterten Verfahren über eine Konfigurationsschnittstelle des BIOS zumindest eine der folgenden Einstellungen oder Aktionen definierbar:
- Neuinstallation des BIOS,
- Zurücksetzen aller Einstellungen im BIOS auf vorbestimmte Standardeinstellungen,
- Reihenfolge des Startens von Komponenten des Computersystems sowie
- Leistungsverbrauch von Komponenten des Computersystems.

Die Konfigurationsschnittstelle des BIOS wird zur Erstellung und Übergabe der ersten Konfigurationsdaten vom BIOS an die Managementeinheit beziehungsweise zur Übergabe der dritten Konfigurationsdaten (welche von extern eingespielt werden) von der Managementeinheit an das BIOS verwendet. Im Unterschied zu Konfigurationsschnittstellen, wie sie in einer herkömmlichen BIOS- oder UEFI-Umgebung implementiert sind, kann die Konfigurationsschnittstelle vorteilhaft zusätzliche Funktionalität der erläuterten Art aufweisen.

Im Falle eines Zurücksetzens aller Einstellungen im BIOS kann die Konfigurationsschnittstelle beispielsweise ermöglichen, anstelle einer Übertragung einer Vielzahl von Standardeinstellungen der Parameter im Rahmen der Konfigurationsdaten lediglich einen Befehl an das BIOS zu übertragen, vorbestimmte Standardeinstellungen der Parameter wieder herzustellen. Auf diese Weise kann das BIOS einfach zurückgesetzt werden.

Ferner kann die Konfigurationsschnittstelle ermöglichen, bei einer Neuinstallation des BIOS, das heißt bei einem Aufspielen einer aktualisierten BIOS-Version (sogenanntes Flashen), gleichzeitig mittels des erläuterten Verfahrens zur Übertragung von Konfigurationsdaten in das BIOS vorbestimmte Einstellungen im BIOS vornehmen.

Es ist auch denkbar, über die Konfigurationsschnittstelle des BIOS verbesserte Einstellungen hinsichtlich einer Boot-Reihenfolge von Komponenten des Computersystems beziehungsweise hinsichtlich eines Leistungsverbrauch einzelner Komponenten des Computersystems vorzusehen.

Vorzugsweise sind die Konfigurationsdaten passwortgeschützt. Ergänzend oder alternativ dazu werden die Konfigurationsdaten verschlüsselt übergeben.

Durch einen Passwortschutz beziehungsweise einer Verschlüsselung ist sichergestellt, dass Konfigurationsdaten nur durch gesicherte Instanzen in einem Computersystem übertragen beziehungsweise verarbeitet werden können. Letzten Endes dient diese Sicherheit schließlich dazu, dass nur autorisiertes Servicepersonal Konfigurationsdaten auslesen, übertragen und bearbeiten kann. Es ist denkbar, nur das Passwort für den Zugang der Konfigurationsdaten verschlüsselt zu übertragen. Es ist jedoch auch denkbar, die Konfigurationsdaten zu verschlüsseln.

Im Rahmen einer Übertragungssicherheit ist es auch denkbar, dass das BIOS bei der Übergabe von Konfigurationsdaten an die Managementeinheit eine Signatur zusammen mit den Konfigurationsdaten übermittelt, anhand welcher eine Identifikation des BIOS in einem jeweiligen Computersystem und/oder ein Zeitstempel vorgegeben ist. Auf diese Weise ist es möglich, sämtliche Konfigurationsdaten, welche in der Managementeinheit abgelegt sind, eindeutig zu identifizieren.

Ferner wird ein Computerprogrammprodukt beschrieben, welches auf einem Computersystem ausgeführt werden kann und bei Ausführung auf dem Computersystem ein Verfahren der erläuterten Art durchführt.

Die Erfindung wird nun anhand mehrerer Zeichnungen erläutert.

Es zeigen:
- Figur 1: eine schematisierte Darstellung einer Wechselwirkung zwischen Komponenten von Computersystemen zur Durchführung eines Verfahrens zur Konfiguration eines BIOS und
- Figur 2: eine alternative Darstellung zu Figur 1.

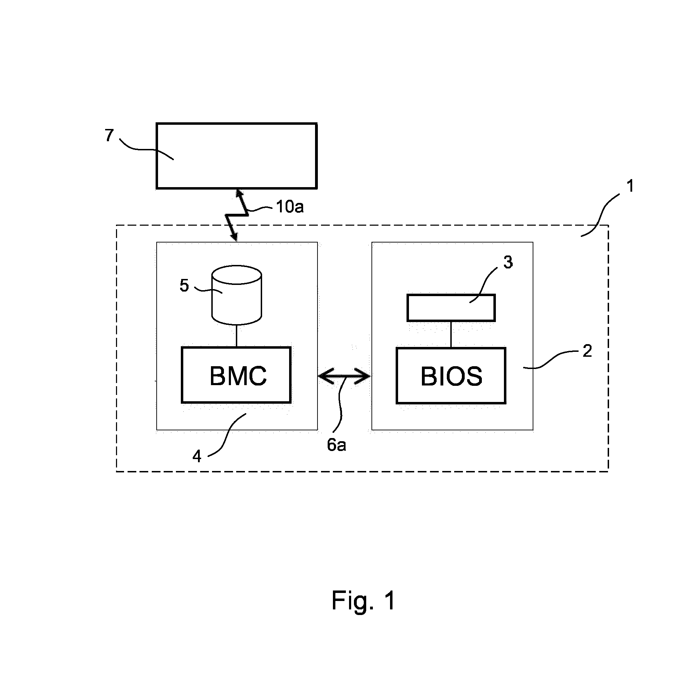

Figur 1 zeigt eine schematisierte Darstellung von Komponenten eines Computersystems 1, welche mit einem externen Computersystem 7 wechselwirken können und ein Verfahren zur Konfiguration eines BIOS im Computersystem 1 durchführen können.

Das Computersystem 1 kann beispielsweise ein Serversystem sein und weist neben einer Vielzahl von Komponenten (der Einfachheit halber nicht dargestellt) eine BIOS-Umgebung 2 sowie eine Managementeinheit 4 auf. Die BIOS-Umgebung 2 ist über eine Kommunikationsschnittstelle 6a mit der Managementeinheit 4 verbunden. Die Kommunikationsschnittstelle 6a dient zur Kommunikation zwischen den beiden Umgebungen 2 und 4, wobei Daten ausgetauscht werden können. Die Kommunikationsschnittstelle 6a ist beispielsweise als KCS-Schnittstelle (KCS = Keyboard Controller Style) oder als VGA-Schnittstelle (VGA = Video Graphics Array) ausgeführt.

Die BIOS-Umgebung 2 umfasst im Wesentlichen einen elektronischen Speicherbaustein 3, in dessen Speicher das eigentliche Ablaufprogramm zur Ausführung des BIOS abgelegt ist. Das BIOS kann sowohl das wohlbekannte Basic Input-Output System als auch dessen Nachfolger das EFI (= Extensible Firmware Interface) beziehungsweise UEFI (Unified Extensible Firmware Interface) umfassen. Generell umfasst das BIOS in diesem Kontext jegliche Art Firmware zur Konfiguration und Ansteuerung von Hardwarekomponenten innerhalb des Computersystems 1.

Die Managementeinheit 4 umfasst einen Managementcontroller, welcher hier beispielhaft als Baseboard Management Controller (BMC) ausgeführt ist. In einem speziellen Ausführungsbeispiel kann der BMC als so genannte Integrated Remote Management Controller (IRMC) ausgeführt sein. In diesem Falle weist der BMC zum Beispiel eine Kommunikationsschnittstelle zur Anbindung der Managementeinheit 4 an ein externes Datennetzwerk 10a auf.

Über den BMC können vorbestimmte Systemzustände des Computersystems 1, beispielsweise Temperatur, Zustand einzelner Komponenten, Betriebssystemzustand, etc. erfasst und verarbeitet werden. Die Managementeinheit 4 weist neben dem BMC ein Datensystem 5 auf, in dem beispielsweise Systemzustandsdaten abgelegt, verarbeitet und aufbereitet werden können. Ferner kann das Datensystem 5 einen Speicher umfassen, in dem Daten abgelegt werden können.

Wie bereits erläutert, ist die Managementeinheit 4 über ein Datennetzwerk 10a nach außen an ein weiteres externes Computersystem 7 anbindbar. Das Datennetzwerk 10a kann beispielsweise ein lokales Datennetzwerk (Local Area Network = LAN) umfassen. Es ist auch denkbar, dass das Datennetzwerk 10a eine Internetverbindung zum externen Computersystem 7 umfasst.

Das BIOS des Computersystems 1 umfasst vorbestimmte Konfigurationseinstellungen, welche festlegen, wie und auf welche Weise das BIOS weitere elektronische Komponenten im Computersystem 1 ansteuert, sodass deren fehlerfreier Betrieb während des Hochfahrens des Computersystems 1 gewährleistet ist. Beispielsweise legt das BIOS fest, in welcher Reihenfolge die einzelnen Komponenten im Computersystem 1 gestartet werden. Ferner adressiert und alloziert das BIOS einen Speicherbereich, in dem das eigentliche Betriebssystem des Computersystems 1 abgelegt ist und ruft dieses bei Starten des Computersystems 1 auf, sodass nach dem Start des Computersystems 1 das Betriebssystem (wenn geladen) die weitere Steuerung des Computersystems 1 übernehmen kann.

Die Konfiguration des BIOS kann verändert werden, wie nachfolgend erläutert wird.

Bei jedem Start des Computersystems 1 wird das BIOS als Ablaufprogramm im Speicher 3 geladen und ausgeführt. Während dieses Prozesses beziehungsweise im Anschluss daran erfolgt ein Selbsttest des Computersystems 1, welcher durch das BIOS ausgelöst wird. Im Rahmen dieses Selbsttests wird die Funktionsfähigkeit vorbestimmter elektronischer Komponenten, wie Festplatten, optische Leseeinrichtungen, Kühlvorrichtungen, Speicherbausteine, Erweiterungskarten, und so weiter, überprüft. Im Falle eines Fehlers kann eine akustische und/oder visuelle Ausgabe an ein Servicepersonal oder einen Benutzer des Computersystems 1 erfolgen. Dieser Selbsttest wird allgemein auch als so genannter Power-on-Self-Test (POST) bezeichnet.

Nach Durchlaufen dieses Selbsttests erfasst das BIOS sämtliche Konfigurationsdaten betreffend die Einstellungen, die üblicherweise über eine Benutzerschnittstelle im BIOS vorgenommen werden können. Die Konfigurationsdaten umfassen vorteilhaft mögliche Parameter, Einstelloptionen, gegenwärtige Belegung der Parameter mit vorbestimmten Werten und Einstellungen sowie Standardeinstellungen der Parameter. Anschließend werden die Konfigurationsdaten des BIOS über eine Konfigurationsschnittstelle des BIOS (so genanntes Generalized Application Binary Interface, GABI), und über die Kommunikationsschnittstelle 6a an die Managementeinheit 4, beziehungsweise an den BMC übergeben. Der BMC erfasst die Konfigurationsdaten und speichert diese im Dateisystem 5 der Managementeinheit 4 ab. Die Konfigurationsdaten verbleiben im Dateisystem 5, selbst wenn das Computersystem 1 nachfolgend heruntergefahren und abgeschaltet wird.

Über das externe Computersystem 7 kann schließlich mit Hilfe des Datennetzwerks 10a auf das Dateisystem 5 der Managementeinheit 4 zugegriffen werden, sodass die abgespeicherten Konfigurationsdaten des BIOS aufgerufen und in das externe Computersystem 7 übertragen werden können.

Das externe Computersystem 7 kann Anwendungen zur Verfügung stellen, mit denen die Konfigurationsdaten ausgelesen, analysiert und bearbeitet werden können. Es ist beispielsweise denkbar, dass ein Servicepersonal die Konfigurationsdaten des BIOS am externen Computersystem 7 bearbeitet.

Ferner ist denkbar, dass im externen Computersystem 7 veränderte Konfigurationsdaten vorbereitet werden, welche bestimmte Änderungen in den Einstellungen des BIOS umfassen. Diese Änderungen können beispielsweise ein bestimmtes geändertes Systemverhalten über das Computersystem 1 betreffen. Die geänderten Konfigurationsdaten können dann über das Datennetzwerk 10a vom Computersystem 7 an die Managementeinheit 4 übergeben werden, wobei die Daten ebenfalls im Dateisystem 5 der Managementeinheit 4 abgelegt werden.

Wird das Computersystem 1 erneut gestartet, so wird wieder das BIOS aus dem Speicher 3 der BIOS-Umgebung 2 geladen und ausgeführt. Anschließend können die geänderten Konfigurationsdaten über den BMC der Managementeinheit 4 aus dem Dateisystem 5 geladen und über die Kommunikationsschnittstelle 6a an die BIOS-Umgebung 2 übergeben werden, sodass die geänderten Konfigurationsdaten schließlich über eine Konfigurationsschnittstelle des BIOS in die Programmstruktur des BIOS eingebunden werden. Dadurch können beispielsweise veraltete Einstellungen im BIOS überschrieben werden, sodass aktualisierte Einstellungen im BIOS vorliegen.

Es ist denkbar, dass nach Überschreiben der alten Konfigurationsdaten mit den neuen geänderten Konfigurationsdaten das BIOS seinerseits die aktualisierten Konfigurationsdaten wieder an die Managementeinheit 4 übergibt, welche dort in Form einer Kopie im Dateisystem 5 abgelegt werden. Auf diese Weise sind im Dateisystem 5 der Managementeinheit 4 zu jeder Zeit gegenwärtige Konfigurationsdaten des BIOS abgelegt, welche den gegenwärtigen Zustand des BIOS und somit mittelbar auch den gegenwärtigen Systemzustand des Computersystems 1 wiedergeben.

Nach Verändern der Einstellungen im BIOS ist es denkbar, dass eine bestimmte Aktion durchgeführt wird, um die Einstellungen im BIOS zu übernehmen. Ein derartige Aktion kann beispielsweise ein Neustart des Computersystems 1 umfassen.

Aufgrund der Übergabe von Konfigurationsdaten aus der BIOS-Umgebung 2 an die Managementeinheit 4 bei jedem Start des Computersystems 1 liegt zu jedem Zeitpunkt eine Information über den Konfigurationszustand des BIOS im Dateisystem 5 der Managementeinheit 4 vor. Vorteilhaft kann die Managementeinheit 4 derart energetisch unabhängig von weiteren Komponenten des Computersystems 1 betrieben werden, dass das Dateisystem 5 ausgelesen werden kann, selbst wenn das Computersystem 1 ansonsten inaktiv ist. Somit ist es für ein Servicepersonal auf einfache Weise möglich, zu jedem Zeitpunkt aktuelle Konfigurationsdaten des BIOS auszulesen, zu bearbeiten und neue Einstellungen vorzubereiten, welche bei dem nächsten Neustart des Computersystems 1 entsprechend übernommen werden.

Konfigurationsdaten werden bevorzugt in einer oder mehreren Profildateien gespeichert. Profildateien haben den Vorteil, dass vollständige Konfigurationsprofile vordefinierbar sind, sodass eine Änderung in Einstellungen eines BIOS durch einen vollständigen Austausch von Profildateien durchgeführt werden kann. Dies erlaubt eine vereinfachte Änderung von Einstellungen im BIOS. Zudem erlauben Profildateien eine rasche und vereinfachte Änderung einer Vielzahl von Computersystemen 1, wie sie beispielsweise in Rechenzentren mit mehreren Serversystemen vorliegen.

Bevorzugt liegen die Konfigurationsdaten im XML-Format vor, sodass ein standardisierter und plattformunabhängiger Datenaustausch ermöglicht ist. Ferner ist die standardisierte und einfache Erstellung von Datensätzen möglich. Eine Vielzahl von Variablen, Einstellungen sowie Attributen ist ferner in XML vordefinierbar.

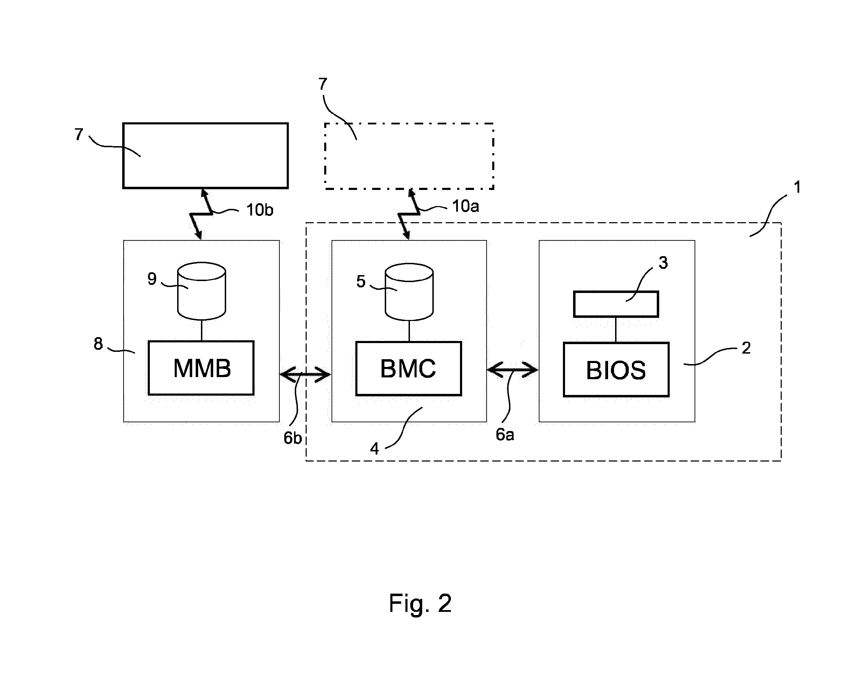

Figur 2 zeigt eine alternative schematisierte Darstellung eines Computersystems 1 und eines externen Computersystems 7, welcher für ein Verfahren zur Konfiguration des BIOS im Computersystem 1 gemäß der erläuterten Art eingerichtet sind. Das Computersystem 1 entspricht im Wesentlichen dem Computersystem 1 gemäß Figur 1. Allerdings beschreibt das Computersystem 1 gemäß Figur 2 beispielhaft eine Blade-Server-Struktur, wobei das Computersystem 1 einen Bladeserver umfasst mit einer BIOS-Umgebung 2 und einer Managementeinheit 4 der erläuterten Art. Das Computersystem 1 kann über eine Kommunikationsschnittstelle 6b mit einem weiteren Blade-Computersystem 8 kommunizieren, wobei das Computersystem 8 ein Management-Computersystem darstellt. Insbesondere kann das Computersystem 8 beispielsweise einen so genannten Management-Blade-Server (MMB) umfassen. Ferner umfasst das Management-Computersystem 8 ein Dateisystem 9, in dem Daten abgelegt sind.

Die Kommunikationsschnittstelle 6b umfasst beispielhaft einen so genannten System Management Bus (SM-Bus), welcher zur Kommunikation der einzelnen Bladeserver 1 und 8 dient. Der SM-Bus kann beispielsweise über eine so genannte Backplane im Serversystem die einzelnen Bladeserver 1 und 8 verbinden. Gemäß Figur 1 kann das Computersystem 1 mit einem weiteren externen Computersystem 7 über ein Datennetzwerk 10a kommunizieren, wie zu Figur 1 erläutert wurde.

Alternativ oder ergänzend dazu ist es gemäß der Anordnung aus Figur 2 auch möglich, Konfigurationsdaten des BIOS, welche im Dateisystem 5 der Managementeinheit 4 des Computersystems 1 abgelegt sind, über die Kommunikationsschnittstelle 6b an das Management-Computersystem 8 weiterzugeben. Die Konfigurationsdaten können schließlich im Dateisystem 9 des Management-Computersystems 8 abgelegt werden und schließlich über ein Datennetzwerk 10b einem externen Computersystem 7 zur Verfügung gestellt werden. Das Datennetzwerk 10b kann ein zum Datennetzwerk 10a separates Netzwerk beziehungsweise ein identisches Netzwerk oder einen Teil des Datennetzwerks 10a umfassen.

Somit stellt die Anordnung gemäß Figur 2 eine Erweiterung der Anordnung aus Figur 1 insbesondere für Blade-Server-Systeme dar. Konfigurationsdaten einer BIOS-Umgebung 2 im Computersystem 1 werden an eine übergeordnete Managementeinheit, das Management-Computersystem 8, übergeben, welches das Computersystem 1 innerhalb des Blade-Server-Systems steuert und verwaltet. Die Konfigurationsdaten werden schließlich vom Management-Computersystem 8 an ein externes Computersystem 7 übergeben beziehungsweise vom externen Computersystem 7 empfangen und schließlich über die Managementeinheit 4 des Computersystems 1 in die BIOS-Umgebung 2 des Computersystems 1 eingespielt.

Zusätzlich zu den obigen Erläuterungen ist es denkbar, dass weitere Konfigurationsdaten ausgetauscht werden, welche eine Konfiguration der Managementeinheit 4, insbesondere des BMC, betreffen. Diese zusätzlichen Konfigurationsdaten erlauben die separate Einstellung und Konfiguration des BMC innerhalb der Managementeinheit 4, losgelöst von einer Konfiguration des BIOS in der BIOS-Umgebung 2. Es ist jedoch auch denkbar, dass eine Konfiguration des BMC der Managementeinheit 4 durch Konfigurationsdaten des BIOS in der BIOS-Umgebung 2 vorgenommen wird.

Ein erläutertes Verfahren zur Konfiguration eines BIOS in einem Computersystem ermöglicht eine vereinfachte und komfortable Einrichtung eines Computersystems, wobei Konfigurationsdaten eines BIOS an ein externes Computersystem zur Bearbeitung weitergegeben werden können. Auf diese Weise kann eine Änderung der Einstellungen im BIOS vorgenommen werden unabhängig vom aktuellen Betrieb des Computersystems 1. Zudem erlaubt das Verfahren eine umfassende Darstellung sämtlicher Konfigurationsdaten im BIOS, welche einer Darstellung innerhalb einer Benutzerschnittstelle des BIOS entspricht. Somit kann eine Vielzahl von Endgeräten zeitsparend und komfortabel administriert werden.

Sämtliche dargestellten Infrastrukturen sind lediglich beispielhaft gewählt.

### Bezugszeichenliste

- 1: Computersystem
- 2: BIOS-Umgebung
- 3: Speicher in BIOS-Umgebung
- 4: Managementeinheit
- 5: Dateisystem in Managementeinheit
- 6a, 6b: Kommunikationsschnittstelle
- 7: externes Computersystem
- 8: Management-Computersystem
- 9: Dateisystem im Management-Computersystem
- 10a, 10b: Datennetzwerk
- BIOS: Basic Input-Output System
- BMC: Baseboard Management Controller
- MMB: Management Blade

## Patentansprüche

1. Verfahren zur Konfiguration eines Basic Input-Output Systems (BIOS) in einem Computersystem (1), umfassend die Schritte:
- Erstellen von ersten Konfigurationsdaten im BIOS zur Konfiguration des BIOS,
- Übergabe der ersten Konfigurationsdaten vom BIOS an eine Managementeinheit (4) des Computersystem (1) sowie
- Speichern der ersten Konfigurationsdaten in der Managementeinheit (4),
wobei die Schritte bei jedem Start des Computersystems (1) durchgeführt werden.

2. Verfahren nach Anspruch 1, wobei die Übergabe der ersten Konfigurationsdaten vom BIOS an die Managementeinheit (4) nach Beenden eines Selbsttests von Komponenten des Computersystems (1) erfolgt.

3. Verfahren nach Anspruch 1 oder 2, ferner umfassend die Schritte:
- Erstellen von zweiten Konfigurationsdaten in der Managementeinheit (4) zur Konfiguration der Managementeinheit (4) und
- Speichern der zweiten Konfigurationsdaten in der Managementeinheit (4).

4. Verfahren nach einem der Ansprüche 1 bis 3, ferner umfassend den Schritt:
- Übergabe der Konfigurationsdaten, welche in der Managementeinheit (4) gespeichert sind, von der Managementeinheit (4) über ein Datennetzwerk (10a) an ein weiteres Computersystem (7).

5. Verfahren nach einem der Ansprüche 1 bis 4, ferner umfassend die Schritte:
- Übergabe von dritten Konfigurationsdaten von einem weiteren Computersystem (7) über ein Datennetzwerk (10a) an die Managementeinheit (4) des Computersystems (1), sowie
- Speichern der dritten Konfigurationsdaten in der Managementeinheit (4),
wobei die dritten Konfigurationsdaten vordefinierte Einstellungen zur Konfiguration des BIOS und/oder der Managementeinheit (4) umfassen.

6. Verfahren nach Anspruch 5, ferner umfassend die Schritte:
- Analyse der dritten Konfigurationsdaten in der Managementeinheit (4) und
- Übergabe der dritten Konfigurationsdaten von der Managementeinheit (4) an das BIOS, falls die Analyse der dritten Konfigurationsdaten ergeben hat, dass die dritten Konfigurationsdaten zur Konfiguration des BIOS vorbestimmt sind und sich von den ersten Konfigurationsdaten unterscheiden.

7. Verfahren nach einem der Ansprüche 1 bis 6, wobei die Konfigurationsdaten obligatorisch
- vorbestimmte Parameter sowie
- momentane Einstellungen der Parameter und fakultativ
- Standardeinstellungen der Parameter umfassen.

8. Verfahren nach einem der Ansprüche 1 bis 7, wobei die Konfigurationsdaten, welche in der Managementeinheit (4) gespeichert sind, in einer Profildatei zusammengefasst sind.

9. Verfahren nach einem der Ansprüche 1 bis 8, wobei über eine Konfigurationsschnittstelle des BIOS zumindest eine der folgenden Einstellungen oder Aktionen definierbar ist:
- Neuinstallation des BIOS,
- Zurücksetzen aller Einstellungen im BIOS auf vorbestimmte Standardeinstellungen,
- Reihenfolge des Startens von Komponenten des Computersystems (1) sowie
- Leistungsverbrauch von Komponenten des Computersystems (1).

10. Verfahren nach einem der Ansprüche 1 bis 9, wobei die Konfigurationsdaten im XML-Format vorliegen.

11. Verfahren nach einem der Ansprüche 1 bis 10, wobei die Konfigurationsdaten passwortgeschützt sind und/oder verschlüsselt übergeben werden.

12. Computerprogrammprodukt, welches auf einem Computersystem (1, 7) ausgeführt werden kann und bei Ausführung auf dem Computersystem (1, 7) ein Verfahren gemäß den Ansprüchen 1 bis 11 durchführt.
